# EUROPEAN PATENT SPECIFICATION

(11) **EP 2 382 875 B1**
(45) Date of publication and mention of the grant of the patent: **11.11.2015**
(21) Application number: 09835119.0
(22) Date of filing: 24.12.2009
(51) Int. Cl.: A23L 1/314, A23L 1/317

(54) **ENZYME PREPARATION FOR SINGLE-INGREDIENT MEAT PRODUCT AND METHOD FOR PRODUCING SINGLE-INGREDIENT MEAT PRODUCT**
ENZYMPRÄPARAT FÜR EIN FLEISCHPRODUKT AUS EINEM EINZIGEN INHALTSSTOFF SOWIE VERFAHREN ZUR HERSTELLUNG DES FLEISCHPRODUKTS AUS EINEM EINZIGEN INHALTSSTOFF
PRÉPARATION ENZYMATIQUE POUR PRODUITS DE VIANDE À UN SEUL INGRÉDIENT ET PROCÉDÉ DE PRÉPARATION DE PRODUITS DE VIANDE À UN SEUL INGRÉDIENT

(30) Priority: 26.12.2008 JP 2008333904
(43) Date of publication of application: 02.11.2011
(73) Proprietor: Ajinomoto Co., Inc., Tokyo 104-8315 (JP)
(72) Inventor: OGAWA, Teppei, Kawasaki-shi Kanagawa 210-8681 (JP); ISHIDA, Rikiya, Kawasaki-shi Kanagawa 210-8681 (JP)
(74) Representative: Strehl Schübel-Hopf & Partner
(86) International application number: PCT/JP2009/071879
(87) International publication number: WO 2010/074338

(56) References cited:
- EP-A1- 2 340 722
- WO-A1-2008/120798
- WO-A1-2008/120798
- JP-A- 2007 312 723
- US-A- 6 042 851
- KUTEMEYER C ET AL: "The influence of salts and temperature on enzymatic activity of microbial transglutaminase", FOOD CONTROL, BUTTERWORTH, LONDON, GB, vol. 16, no. 8, 1 October 2005 (2005-10-01), pages 735-737, XP027619720, ISSN: 0956-7135 [retrieved on 2005-10-01]

## Description

### Technical Field

The present invention relates to a process for finishing ham.

### Background Art

Single-ingredient meat products such as hams, bacons, roast pork, roast beefs, and the like are usually desired to have hard and elastic properties. Since the single-ingredient meat products are tasted favorably as slices generally, most of the products have also been marketed in sliced forms. These sliced products are required to be hard to chew even though they are thin, and thus the hard and elastic products are chosen. Industrially, yield of the products, i.e., productivity, is much influenced by the tolerance to rupturing when sliced. The product having a hard and elastic property withstands shearing force when sliced, giving a high yield of the product and improving the productivity. Therefore, finishing to the hard and elastic single-ingredient meat product is a big problem for the manufacturers since it influences directly on the profit. It is difficult to prevent cracking of the product when sliced, particularly in low amount of water added hams because the amount of protein materials or polysaccharides to be used is lower, in comparison to high amount of water added hams.

In this problem, a use of a phosphate is very effective; thus, a phosphate is commonly used in the process of producing processed meat products. Polymerized phosphates are highly effective in comparison with a table salt or alkaline salt, and greatly contribute to the improvement of the quality and productivity of the single-ingredient meat product. The phosphate, however, loses an in vivo balance between calcium and phosphorus, particularly the polymerized phosphate is being elucidated to have a strong metal sequestering capability to insolubilize calcium and inhibit its absorption; thus, the consumption of processed foods containing a large quantity of phosphates is increased, and an excessive intake of phosphates has been considered to be a problem nutritionally. In addition, in some of European countries (representatively France and Italy), some sorts of single-ingredient meat products such as high-grade hams have not yet been approved to use a phosphate.

In this situation, as for a method of using no phosphate, the followings are disclosed: a method for improving a single-ingredient meat product with transglutaminase, calcium oxide and trisodium citrate (JP-A-2004-248661 Official Gazette), and a method of using a composition in which calcium chloride and magnesium chloride are added to sodium chloride at a specific ratio and a composition ratio by weight of calcium chloride to magnesium chloride is adjusted in a specific range (JP-A-2004-242674 Official Gazette).

The method as disclosed in JP-A-2004-248661 shows a very high improvement effect for single-ingredient meat products; in this method, however, since a highly alkaline material is used, there is such a problem that the handling had to be made carefully at work in an aspect of safety. The improved method for single-ingredient meat products as disclosed in JP-A-2004-242674, is poor and insufficient in the improving effect of elasticity and binding property.

In addition, there is known an improved method for meat products using transglutaminase and an auxiliary protein as shown in Japanese Patent No.2630829 official gazette. Though this method is very effective for paste products, there is a problem that the necessary amount of transglutaminase to be added is uneconomically too large.

### Disclosure of Invention

In this situation, the purpose of the invention is to provide a method for finishing ham hard and elastically to suppress cracking of the product and improve sliceability without using any phosphate.

The present inventors worked assiduously to elucidate a method for using no phosphate, and found that use of magnesium chloride and transglutaminase allowed producing a single-ingredient meat product excellent in binding property, hardness and elasticity. Thus the invention was completed. Namely, the invention may be described as follows.
[1] A process for finishing ham, which comprises using transglutaminase and magnesium chloride, wherein the ham is a low amount of water added ham in which the rate of the water addition is 105 to 130%.
[2] The process according to [1] above, wherein the amount of transglutaminase is in 0.1 to 100 units per 100 g of the rawmaterial ham, and the amount of magnesium chloride calculated as the weight of magnesium chloride hexahydrate is in 0.1 to 2.0 g per 100 g of the raw material ham.
[3] The process according to [1] or [2] above, wherein the amount of transglutaminase is in 1 to 100 units per 1 g of magnesium chloride calculated as the weight of magnesium chloride hexahydrate.
[4] A ham obtainable by the process of any one of [1] to [3] above.

In the process of the invention, pressed hams which are prepared by gathering some meat pieces and forming the product in a mold, are included too, but processed livestock meat products such as sausage or hamburger which are prepared from ground or paste raw material meat are not included.

The low amount of water added hams used in the invention mean those in which the water addition rate (a rate of the weight of the pickled meat to the weight of the raw material meat) is 105-130%. Namely, the hams prepared by using a pickle solution to be added and penetrated to a raw material meat at a low water addition rate in the amount of 5-30 g of the pickle solution per 100 g of the meat are included.

Transglutaminases used in the invention include both of calcium-independent ones and calcium-dependent ones. Examples of the former ones are those of microorganism origin, for example, Actinomyces, Bacillus subtilis, etc. (e.g., see JP-A-64-27471). Examples of the latter ones are those originating from guinea pig's liver (see JP-B-1-50382), those originating from microorganisms such as Oomycota; those originating from animals such as bovine blood, and swine blood; those originating from fishes such as salmon and red sea bream (see: Nobuo Seki et. al., Journal of the Japanese Society of Fisheries Science, vol.56, 125-132 (1990) ; and Spring Meeting of the Japanese Society of Fisheries Science, 1990, Summary of Lectures, 219pp.) ; FactorXIII (factor 13) existing in blood, etc. (WO 93/15234); and those originating from oyster. In addition, transglutaminases produced by gene recombination may be used (JP-A-1-300889; JP-A-6-225775; JP-A-7-23737; European Patent Publication EP-0693556A), all of them may be used; they are not limited to their origins or production processes. Among them, the calcium-independent ones are preferred in view of the functionality and the economy for use as food. For example, transglutaminases originating from the above microorganisms (JP-A-64-27471) are most appropriate at present because they satisfy all of the above requirements.

An activity unit of transglutaminase is measured and defined by the following hydroxamate method. Namely, transglutaminase is allowed to react in a reaction medium containing benzyloxycarbonyl-L-glutamylglycine and hydroxylamine as the substrates at a temperature of 37°C in a tris buffer of pH 6.0, and a produced hydroxamic acid is converted into an iron complex in a presence of trichloroacetic acid. Then, an absorbance of the reaction medium is measured at 525 nm, and the amount of hydroxamic acid generated is estimated from a calibration curve. Thus, the enzyme amount which generates 1µ mole of hydroxamic acid for 1 minute is defined as a TGase activity unit, i.e. , 1 unit (1U) (see: JP-A-64-27471; USP 5,156,956).

Magnesium chloride utilizable in the invention may be those of a grade applicable to foods, including anhydrous magnesium chloride and magnesium chloride hydrate; they may be used in combination.

In the process for finishing ham of the invention, transglutaminase and magnesium chloride are added into pickle for ham, and the pickle to which transglutaminase and magnesium chloride are added is allowed to penetrate into the ham. In this context, the pickle means water per se, or water in which salt, seasonings, foreign proteins (casein, soybean protein, gelatin, etc.), starch, dextrin, etc. are dissolved; the addition of transglutaminase and magnesium chloride may be done in any way. An enzyme preparation containing transglutaminase and magnesium chloride as active ingredients may be added to the pickle, or alternatively the pickle may be prepared by dissolving transglutaminase and magnesium chloride together with other raw materials for pickle such as salt, seasonings, and foreign proteins in water.

The method for making the pickle penetrate into the raw material meat includes: a method of immersing the raw material meat into pickle; a method for splaying pickle on a surface of raw material meat; a method of coating; and a method for injection with an injector or syringe; these methods may be used in combination. After penetration of pickle, the treated meat may preferably be subjected to rubbing, tumbling, massaging, etc., to diffuse the component of pickle homogeneously into the raw material meat. Further, standing at a low temperature allows natural diffusion.

The weight ratio of the pickled meat to the raw material meat is generally called the water addition rate; in commercially produced hams, the water addition rate is generally about 105 to about 220%. The invention is applied to low amount of water added hams having the water addition rate of 105-130%.

After conducting the above processing, the treated meat is heated as such or in a state of molding or sealing by packing in a casing or molding or by tying up with a string or vacuum-packing. According to a form of the product, it may be coated. The heating treatment may be conducted in any way for heating food, for example, oil cooking, boiling, steaming, roasting, cooking in an oven, cooking in a microwave oven, etc. The products cooked under heating are supplied as commercial goods after packaged as such or in a sliced form. In addition, the treated meat may also be commercialized in a frozen or chilled state without heating and cooked by heating immediately before eating. Such a form of the products is included in the products of the invention.

As for the amounts of transglutaminase and magnesium chloride to be added to pickle, transglutaminase may be added in an amount of 0.1-100 units, preferably 1-30 units, and magnesium chloride may be added in an amount of 0.1-2.0 g, preferably 0.5-0.9 g calculated as the weight of magnesium chloride hexahydrate, per 100 g of the raw material meat. More preferably, transglutaminase may be used in an amount of 1-100 units per 1 g of magnesium chloride (calculated as the weight of its hexahydrate). In this context, the weight calculated as magnesium chloride hexahydrate means the weight calculated as the weight of the hexahydrate irrespective of the amount of the binding water. For example, when magnesium chloride to be used is 1 g of the hexahydrate (molecular weight 203.3), the calculated weight is 1 g exactly, and when magnesium chloride to be used is 1 g of the anhydride (molecular weight 95.2), the calculated weight becomes 2.14 g (1 x 203.3 ÷ 95.2 = 2.14).

The enzyme preparation of the invention preferably comprises transglutaminase in a ratio of 1-100 units, preferably 10-20 units per 1 g of magnesium chloride (calculated as the weight of the hexahydrate) ; and if required, (a) bulking agent (s) such as dextrin, lactose, and starch may be mixed to the preparation of the invention; and further a commonly used seasonings may be blended.

### Brief Description of Drawings

Fig.1 shows a comparison of breaking strengths between a ham according to the invention and reference products (Example 1).
Fig. 2 shows a comparison of the breaking strengths between a ham prepared in the prior art and the ham according to the invention (Example 2).

### Best Mode for Carrying Out the Invention

Hereinafter, the invention will be explained in detail based on Examples.

### Example 1

A pickle solution was prepared according to Table 1, of which 240 g was injected with an injector into 2,000g of pork ham (1, 000 g of inside ham and 1, 000 g of outside ham) to make the whole weight 2,240 g. As transglutaminase, commercially available one originating from Streptomyces mobaraensis (Ajinomoto Co., Inc., Activa TG, specific activity: 1,000 units/g product; hereinafter sometimes referred to as TG) was used. In this connection, Streptomyces mobaraensis had been named Streptoverticillium mobaraense before 1990. As for magnesium chloride, magnesium chloride S (MgCl₂ 6H₂O) supplied by Tomita Pharmaceutical Co., Ltd. was used. The meat after the injection was subjected to tumbling for 1.5 hours at 3°C in a refrigerator, then cut into cubes of 3 cm - 5 cm, and packed in a casing tube with a lay flat width of 12 cm. The product was placed in a smoke house (Reich Co. , UKF1800BE), then heated at a setting temperature of 60°C until a central temperature reached 50°C, and further heated at the setting temperature of 70°C until the central temperature reached 67°C. After termination of the heating, the resulting ham was preserved at 3°C overnight in the refrigerator and evaluated.

**Table 1**

| Raw Material | Control | TG added | MgCl₂ added | TG/MgCl₂ co-added |
|---|---|---|---|---|
| | kg | kg | kg | kg |
| Water | 6.69 | 6.68 | 6.09 | 6.08 |
| Ice | 0.67 | 0.67 | 0.67 | 0.67 |
| Table salt | 1.94 | 1.94 | 1.94 | 1.94 |
| Sodium ascorbate | 0.10 | 0.1 | 0.1 | 0.1 |
| Dextrin | 0.18 | 0.18 | 0.18 | 0.18 |
| Glucose | 0.42 | 0.42 | 0.42 | 0.42 |
| MgCl₂ 6H₂O | | | 0.6 | 0.6 |
| ACTIVA TG | | 0.01 | | 0.01 |
| Total | 10 | 10 | 10 | 10 |

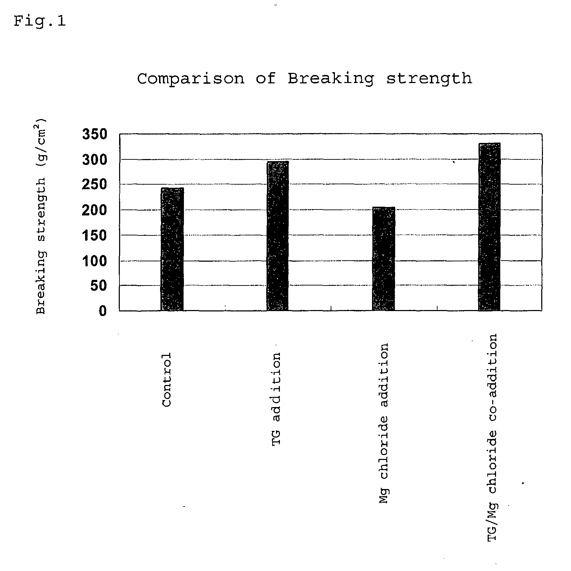

The evaluation was made for a sensory evaluation and an evaluation of physical property. In the evaluation of the physical property, a sliced ham of 3 mm thickness and 25 mm in width was prepared and subjected to a tensile test at a rate of 5 mm/second with a texture analyzer (Stablemicrosystems Co. , TA-XTi) to give the breaking strength. Results are shown in Fig.1. A stress direction which is produced by extension of a sample with the texture analyzer highly correlates with that loaded on a sliced end of the ham with a slicer. Therefore, a high value of the breaking strength in the tensile test indicates that the cracking is hardly produced by the slicing operation. The sensory evaluation was conducted by three well-trained panelists, who tasted each sample sliced in 1.2 mm thickness and freely commented. Results are shown in Table 2.

**Table 2**

| Control | TG added | MgCl₂ added | TG/MgCl₂ co-added |
|---|---|---|---|
| Weak in elasticity and binding property | Strong in elasticity and binding property. Good texture | Elasticity equivalent to or slightly inferior to the control | Elasticity and binding property stronger than that of TG added. Good texture |

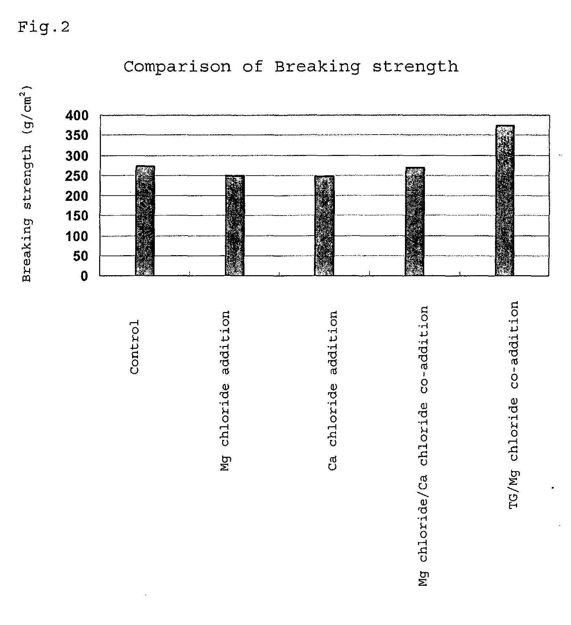

As shown in Figs. 1 and 2, the addition of TG produces improvement of the breaking strength and texture of hams. On the other hand, the addition of magnesium chloride did not produce any improving effect, and conversely remarkable reduction of the breaking strength was observed. However, in the combination of TG and magnesium chloride, a much better improving effect than in the addition of TG alone was observed. The fact that the improvement of the breaking strength was confirmed in this test suggests that a combined use of TG with magnesium chloride controls the cracking (exfoliation of an adhered part of meat, damage of a muscular fiber) which occurs during the production, particularly in the slicing operation. It was not expected at all that the use of TG in combination with magnesium chloride which reduces the breaking strength produces much greater effect than in the addition of TG alone.

### Example 2

As a technique for improving the physical property of hams, an addition of Mg chloride and Ca chloride in a certain concentration to salt has been published in Patent Document JP-2004-242627. This prior art was compared with the art of the invention for the effect to hams. A pickle solution was prepared according to Table 3, then hams were produced by the procedure according to Example 1, and evaluated. In addition, as Ca chloride used, a product of Tomita Pharmaceutical Co., calcium chloride H (CaCl₂ 2H₂O) was used. The ratio of the addition of Mg chloride and Ca chloride in the sample of Mg chloride/Ca chloride co-added as shown in Table 3 was set equivalently to the ratio to salt as described in Example of JP-2004-242627. In the sample of Mg chloride added and the sample of Ca chloride added, water was added in place of salt not to be added with the same amount as that of the salt.

**Table 3**

| Raw Material | Control | MgCl₂ added | CaCl₂ added | MgCl₂/ CaCl₂ co-added | TG/MgCl₂ co-added |
|---|---|---|---|---|---|
| | kg | kg | kg | Kg | kg |
| Water | 6.69 | 6.57 | 6.45 | 6.33 | 6.08 |
| Ice | 0.67 | 0.67 | 0.67 | 0.67 | 0.67 |
| Table salt | 1.94 | 1.94 | 1.94 | 1.94 | 1.94 |
| Sodium ascorbate | 0.10 | 0.1 | 0.1 | 0.1 | 0.1 |
| Dextrin | 0.18 | 0.18 | 0.18 | 0.18 | 0.18 |
| Glucose | 0.42 | 0.42 | 0.42 | 0.42 | 0.42 |
| MgCl₂ 6H₂O | | 0.122 | | 0.122 | 0.6 |
| CaCl₂ 2H₂O | | | 0.242 | 0.242 | |
| ACTIVA TG | | | | | 0.01 |
| Total | 10 | 10 | 10 | 10 | 10 |

In the same manner as that as described in Example 1, a physical property evaluation with the texture analyzer and a sensory evaluation were conducted. Fig. 2 shows results of the evaluation of the physical property with the texture analyzer. Table 4 shows results of the sensory evaluation.

**Table 4**

| Control | MgCl₂ added | CaCl₂ added | MgCl₂/ CaCl₂ co-added | TG/MgCl₂ co-added |
|---|---|---|---|---|
| Weak in elasticity and binding property | Weak in elasticity and binding property. Soft texture | Weak in elasticity and binding property. Soft texture | Weak in elasticity and binding property. Very soft texture | Elasticity and binding property stronger than the sample of TG added. Good texture |

### Industrial Applicability

According to the production process of the invention, ham superior in the binding property, hardness and elasticity can be obtained without using a phosphate. The resulting ham has a good texture, and further it is possible to reduce cracking occurred in the production, particularly during the slicing operation, caused by peeling-off of the adhered part of meat or the damage of muscular fiber. Thus, the present invention is quite useful in the food field.

## Claims

1. A process for finishing ham, which comprises using transglutaminase and magnesium chloride wherein the ham is a low amount of water added ham in which the rate of the water addition is 105 to 130%.

2. The process according to Claim 1, wherein the amount of transglutaminase is in 0.1 to 100 units per 100 g of the raw material ham, and the amount of magnesium chloride calculated as the weight of magnesium chloride hexahydrate is in 0.1 to 2.0 g per 100 g of the raw material ham.

3. The process according to claim 1 or 2, wherein the amount of transglutaminase is in 1 to 100 units per 1 g of magnesium chloride calculated as the weight of magnesium chloride hexahydrate.

4. A ham obtainable by the process of any one of claims 1 to 3.

## Patentansprüche

1. Verfahren zur Endbehandlung von Schinken, welches die Verwendung von Transglutaminase und Magnesiumchlorid umfasst, wobei der Schinken ein Schinken ist, zu dem eine geringe Menge Wasser gegeben wurde, wobei die Wasserzugaberate 105 bis 130 % ist.

2. Verfahren nach Anspruch 1, wobei die Menge der Transglutaminase 0,1 bis 100 Einheiten pro 100 g des Rohmaterialschinkens ist und die Menge des Magnesiumchlorids, berechnet als das Gewicht von Magnesiumchloridhexahydrat, 0,1 bis 2,0 g pro 100 g des Rohmaterialschinkens ist.

3. Verfahren nach Anspruch 1 oder 2, wobei die Menge der Transglutaminase 1 bis 100 Einheiten pro 1 g des Magnesiumchlorids, berechnet als das Gewicht von Magnesiumchloridhexahydrat, ist.

4. Durch das Verfahren nach einem der Ansprüche 1 bis 2 erhältlicher Schinken.

## Revendications

1. Procédé de finition de jambon, lequel comprend l'utilisation de transglutaminase et de chlorure de magnésium, dans lequel le jambon est un jambon additionné d'une faible quantité d'eau dans lequel le taux d'addition d'eau est de 105 à 130 %.

2. Procédé selon la revendication 1, dans lequel la quantité de transglutaminase se trouve entre 0,1 et 100 unités pour 100 g du jambon de matière première, et la quantité de chlorure de magnésium calculée comme la masse d'hexahydrate de chlorure de magnésium est comprise entre 0,1 et 2,0 g pour 100 g du jambon de matière première.

3. Procédé selon la revendication 1 ou 2, dans lequel la quantité de transglutaminase est comprise entre 1 et 100 unités pour 1 g de chlorure de magnésium calculé comme la masse d'hexahydrate de chlorure de magnésium.

4. Jambon pouvant être obtenu par le procédé selon l'une quelconque des revendications 1 à 3.
